# FASCICULE DE BREVET EUROPEEN

(11) **EP 2 232 387 B1**
(45) Date de publication et mention de la délivrance du brevet: **17.10.2018**
(21) Numéro de dépôt: 08859472.6
(22) Date de dépôt: 10.12.2008
(51) Int. Cl.: G06F 17/24

(54) **PROCÉDÉ ET SYSTÈME AMÉLIORÉS DE SAISIE ASSISTÉE NOTAMMENT POUR OUTILS DE GESTION INFORMATIQUE**
VERBESSERTES VERFAHREN UND SYSTEM ZUR UNTERSTÜTZTEN EINGABE INSBESONDERE FÜR COMPUTERVERWALTUNGSWERKZEUGE
IMPROVED METHOD AND SYSTEM FOR AIDED INPUT ESPECIALLY FOR COMPUTER MANAGEMENT TOOLS

(30) Priorité: 10.12.2007 FR 0708591
(43) Date de publication de la demande: 29.09.2010
(73) Titulaire: Serensia, 75010 Paris (FR)
(72) Inventeur: FLESSELLES, Emmanuel, F-77330 Ozoir La Ferriere (FR)
(74) Mandataire: Regimbeau
(86) Numéro de dépôt international: PCT/EP2008/067260
(87) Numéro de publication internationale: WO 2009/074623

(56) Documents cités:
- EP-A- 1 596 310
- US-A- 5 857 034
- US-A1- 2002 165 877
- US-A1- 2005 262 429
- US-A1- 2007 033 118
- US-A1- 2007 130 505
- Anonymous: "Windows API - Wikipedia, the free encyclopedia", , 13 October 2007 (2007-10-13), XP055187082, Retrieved from the Internet: URL:https://web.archive.org/web/2007101319 5048/http://en.wikipedia.org/wiki/Windows_ API [retrieved on 2015-04-30]

## Description

La présente invention concerne un procédé de saisie assistée (notamment par intégration automatique) de données entrantes dans un logiciel de gestion de données.

### Etat de la technique

Les procédés de l'état de l'art concernent par exemple l'intégration par flux de données d'écritures comptables dans un système de comptabilité informatique, par reconnaissance optique d'informations contenues dans des pièces comptables sur support papier (typiquement des factures).

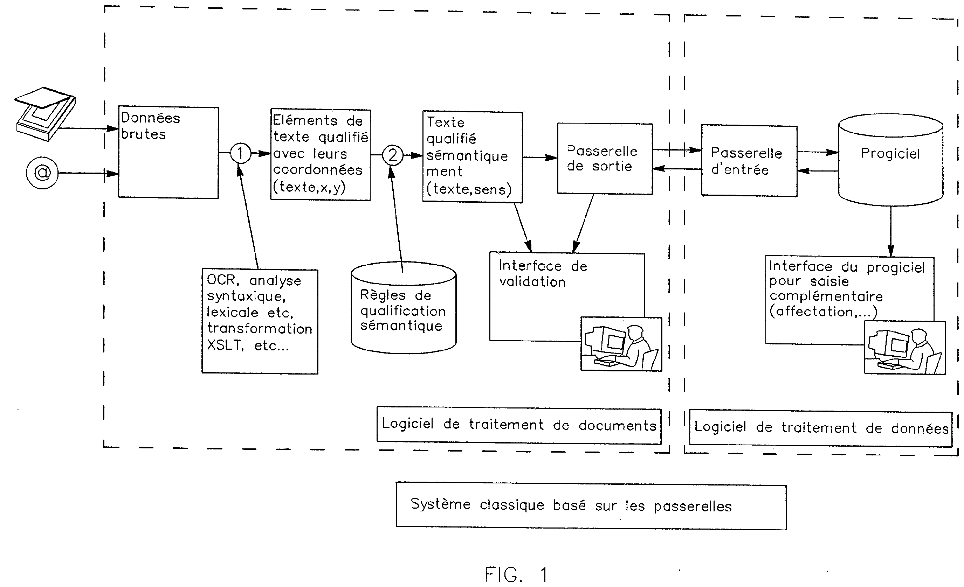

Un exemple concret d'un tel procédé connu est illustré sur la figure 1. En référence à celle-ci, lorsque l'on souhaite automatiser l'intégration des données dans un progiciel de gestion données il est nécessaire de produire un flux de données structurées intégrable dans le progiciel. Le flux est habituellement de deux natures possibles : soit il est issu d'un système de transmission électronique type EDI avec un format de fichier bien spécifié (EDIFACT, XML, PDF, Text, fichier tabulaire, etc.) puis transformé aux spécifications d'entrée de la passerelle du progiciel, soit il est issu d'un système de LAD (pour « Lecture Automatique de Document ») et transformé aux spécifications d'entrée de la passerelle du progiciel.

La chaîne de transformation est alors la suivante : Papier -> Scanner -> OCR -> Extraction des champs -> Structure de donnée à intégrer -> Sas d'entrée -> Logiciel de gestion de données.

Dans le domaine, on connaît notamment les documents US 2007/0033118, US 2005/0262429, US2002/0165877, US 2002/0165877, US 5 857 034, EP 1 596 310 et US le premier des documents sus-mentionnés concerne un procédé de saisie assistée comprenant les étapes d'entrée de données, d'extraction et de transcription. Toutefois, la transcription n'y est pas effectuée par des services d'instrumentation.

Toutefois, il est fréquent dans ce genre de procédé de faire face à des défauts de fiabilité (lecture optique erronée ou imparfaite des données), à des données incomplètes et/ou à la présence de cas particuliers.

C'est pourquoi les données entrantes nécessitent des validations ou corrections manuelles par l'opérateur, et/ou des compléments de saisie manuels par l'opérateur afin d'obtenir une intégration définitive dans le flux de données structurées à destination du logiciel (notamment à des fins de rapprochement, d'affectation analytique, d'affectation comptable dans le cas de la gérance pour compte de tiers, etc.) Ainsi une seconde validation est nécessaire une fois le flux transmis au logiciel afin de compléter et/ou valider l'intégration des données dans le logiciel.

Un autre type de difficulté se présente dans le cas où le logiciel de destination (par exemple un progiciel) n'offre que des possibilités incomplètes, pauvres, voire inexistantes en termes de passerelle permettant l'introduction de données dans le système autrement que par saisie dans des champs de saisie à l'aide du clavier du système. C'est le cas par exemple dans un logiciel préexistant dont le code est fermé (logiciel propriétaire par exemple) et dont les fonctionnalités d'intégration de flux de données structurées sont pauvres, voire inexistantes ou peu documentées.

De plus, ce type de procédé n'offre quasiment aucun retour du progiciel destination sur des corrections à apporter quant aux données brutes. Généralement le type de retour du progiciel se limite à un code d'erreur, souvent en temps différé, sans permettre un apprentissage pour le logiciel de validation. Ainsi des corrections apportées au niveau du logiciel ne sont généralement pas prises en compte au niveau de l'établissement du flux de données structurées.

### Résumé de l'invention

La présente invention a pour objet de pallier les limitations de l'état de la technique et notamment de pallier l'absence de passerelle d'entrée d'un logiciel de gestion de données, ou encore de pallier la faible qualité des services, ou le manque de possibilités (par exemple l'absence de retours de la passerelle) d'une telle passerelle dans le cas où elle existe.

Un autre objet de la présente invention est de simplifier et d'optimiser les saisies manuelles complémentaires qui sont en général nécessaires, dans un but de productivité gain de temps, notamment en les regroupant en un seul point du processus avec l'étape de correction/validation du module d'OCR.

Un autre objet encore de l'invention est d'autoriser, sans compliquer l'ensemble du processus, une saisie enrichie.

Enfin un objet de l'invention est de capitaliser sur ces enrichissements pour améliorer la qualité de l'extraction des données destinée à nourrir la saisie assistée.

On propose à cet effet d'instrumenter la ou les interfaces de saisie du progiciel pour leur faire jouer le triple rôle de passerelle d'intégration automatique ou semi-automatique, d'écran permettant des saisies complémentaires, et enfin de source d'informations (à les traitements initiaux d'extraction et de préparation effectués sur la source brute de données afin d'améliorer en permanence ces traitements).

Ainsi, l'invention permet d'utiliser l'écran de saisie du logiciel comme passerelle d'entrée automatique ou semi-automatique dans le logiciel. On obtient alors un enrichissement fonctionnel au niveau de l'écran de saisie du progiciel. En effet, l'écran de saisie du logiciel devient ainsi le sas d'entrée du logiciel.

Plus spécifiquement, la présente invention propose un procédé de saisie assistée notamment pour un outil de gestion informatique, l'outil de gestion étant exécuté dans un système informatique possédant un système d'exploitation doté de services d'instrumentation qui comprend les étapes suivantes :
(a) intégration de données brutes à partir d'une source extérieure,
(b) extraction de données pertinentes à partir desdites données brutes,
(c) transcription desdites données extraites vers des champs correspondants d'une interface de saisie préexistante appartenant à l'outil de gestion, en vue de permettre des compléments de saisie et une validation d'ensemble, caractérisée en ce que l'étape de transcription est réalisée par appel aux services d'instrumentation du système d'exploitation pour simuler une saisie dans les champs du module de saisie de l'outil de gestion.

On entend par « service d'instrumentation », un ensemble de fonctionnalités offertes par un système d'exploitation et son module de fenêtrage ou un environnement de bureau quelconque. Ces services comprennent de nombreuses caractéristiques parmi lesquelles :
- la possibilité d'explorer la structure des fenêtres d'interface des logiciels pour déterminer leur composition par voie programmatique (Par exemple découvrir que la fenêtre contient un menu, un bouton « ok », plusieurs champs de saisie, le fait que tel champs ou tel texte contienne telle valeur, etc...),
- la possibilité de déterminer et/ou d'être notifié des actions de l'utilisateur (appui sur une touche, click sur un bouton, etc....) et
- la possibilité de déterminer et/ou d'être notifié des changements d'état de l'interface (déterminer la fenêtre au premier plan, déterminer la localisation du curseur, déterminer la fonction par défaut lors de l'appui sur une touche particulière comme la touche « enter », etc...), et
- la possibilité de simuler des actions utilisateurs, saisie de touche, click de souris, mais aussi déplacement et changement de taille des fenêtres, déplacement du point de focus, etc...
L'utilisation conjointe de toutes ces fonctionnalités permet d'instrumenter complètement un écran de saisie. Il est possible de mettre en oeuvre ces services d'instrumentation notamment à travers l'appel de fonction d'API du système d'exploitation (Application Programming Interface en anglais).

Certains aspects avantageux, mais nullement limitatifs de ce procédé sont les suivants :
* les services d'instrumentation permettent notamment de découvrir le modèle et le contenu d'un écran de saisie préexistant et de simuler des actions de l'utilisateur de simuler des actions de l'utilisateur,
* le procédé comprend avant l'étape de transcription, une étape d'affichage, organisé en champs de pré-saisie, des données pertinentes extraites en vue de leur pré-validation.
* l'étape d'extraction comprend une numérisation d'une image papier en image numérique, ou une étape de lecture d'un fichier structuré ou décrit selon un langage de description prédéfini.
* l'étape d'extraction comprend une reconnaissance optique de caractères ou une conversion de document en liste d'éléments alphanumériques et de coordonnées associées, ou une analyse lexicale et syntaxique.
* le procédé comprend en outre une étape de qualification des données extraites à l'aide d'une base de règles d'extraction.
* l'étape (b) comprend une attribution, à l'aide d'une base de règles de pré-saisie, de valeurs possibles pour les différents champs de pré-saisie.
* l'étape (c) de transcription est réalisée par appel de fonctions d'interfaces de programmation au niveau du système d'exploitation et au niveau de l'outil de gestion pour simuler une saisie dans les champs du module de saisie de l'outil de gestion.
* le procédé comprend en outre une étape de saisie manuelle de données complémentaires dans le module de saisie préexistant de l'outil de gestion, et une étape d'enrichissement de la base de règles de pré-saisie et/ou de la base de règles d'extraction en fonction des données complémentaires.
* le procédé comprend une étape d'affichage simultané d'une représentation des données brutes dans une première zone d'affichage, de champs de pré-saisie dans une deuxième zone d'affichage, et d'un écran de saisie du module de saisie préexistant dans une troisième zone d'affichage.

L'invention propose également un système informatique, comprenant une unité centrale, des mémoires de programme et de travail, des dispositifs d'entrée et un dispositif d'affichage, caractérisé en ce qu'il contient des programmes aptes à mettre en oeuvre le procédé tel que défini ci-dessus.

### Brève description des dessins

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
La figure 1 est un schéma de principe d'un procédé de saisie assistée selon l'art antérieur,
La figure 2 est un schéma de principe d'un procédé de saisie assistée selon l'invention, et
Les figures 3 à 6 sont des exemples d'images-écran obtenues avec le procédé de saisie assistée selon l'invention.

### Description détaillée d'un mode de réalisation préféré

On va maintenant décrire l'invention en détail en référence à un exemple d'application classique en soi, consistant à intégrer automatiquement des contenus de factures fournisseurs dans un progiciel de gestion.

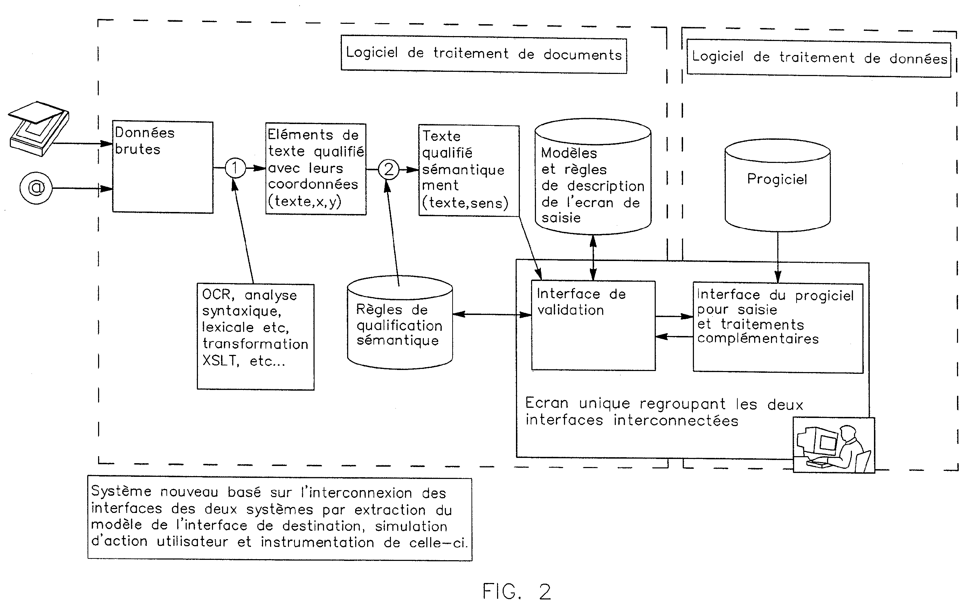

En référence à la figure 2, la saisie assistée des données entrantes selon l'invention met en jeu l'enchaînement des étapes suivantes :
1) entrée de la donnée brute depuis sa source extérieure,
   a. soit par un scanneur qui transforme une image papier en image numérique,
   b. soit par un automate de réception qui lit un fichier structuré par exemple de type EDIFACT ou XML, ou encore décrit selon un langage de description de page de type PDF, XPS, Postscript, etc.
2) Extraction des données pertinentes depuis le fichier brut,
   a. soit par un module de reconnaissance optique de caractères (OCR pour Optical Character Recognition en anglais) qui est capable de trouver les éléments de texte et leur position dans l'image pour les documents numérisés,
   b. soit par des programmes de conversion (par exemple de type PDF2XML) pour des documents de type PDF, Text, Postscript, XPS, qui permettent de transformer un document en une liste de morceaux de texte associés à leurs coordonnées XY dans le document,
   c. soit encore par analyse lexicale et syntaxique pour les fichiers structurées de type XML.
3) Qualification des données grâce à une base de règles préexistante qui a été alimentée manuellement puis enrichie par l'utilisateur, par laquelle le programme est capable d'associer un sens sémantique à chacun des champs isolés les uns des autres avec un taux de confiance adéquat.
   Des exemples de règles sont donnés ci-dessous :
   - Si la donnée est un nombre avec deux chiffres après la virgule associée au symbole euro et que le texte située à sa gauche est « Montant TTC » on peut qualifier cette donnée de « Montant TTC » avec un niveau de confiance élevé ;
   - Si on a localisé le nom du fournisseur ou son numéro de SIREN, il est probable que le montant HT hors taxe se situe dans la même zone sur l'ensemble des documents émanant du même fournisseur.
4) Préparation pour saisie (module de pré-saisie), en deux sous-étapes :
   a. une deuxième base de règles relative au fonctionnement de l'écran de saisie permet d'attribuer à chaque champ de l'écran de saisie 0, 1 ou N possibilités de valeurs en fonction du résultat de l'étape précédente,
   b. Les données ainsi qualifiées sont proposée à l'utilisateur qui peut les valider, les compléter ou les corriger dans une zone de pré-saisie en se référant à la zone de visualisation de la source qui contient selon les cas :
      i. soit une représentation originale du document cas d'un document numérisé par scanner ou décrit dans langage de description de page ;
      ii. soit une représentation reconstituée du document dans le cas d'un fichier structuré de type XML, EDIFACT, etc.
5) Saisie semi-automatique, avec deux sous-étapes principales :
   a. lorsque l'utilisateur décide de valider ces données dans l'écran de pré-saisie, ces valeurs sont alors automatiquement transcrites dans les champs correspondants de l'écran de saisie préexistant du logiciel de gestion ; cette transcription s'effectue par appel de fonctions préexistantes de l'outil de gestion lorsqu'elles sont disponibles, soit dans le cas contraire par exemple par le processus suivant :
      i. Appels des services d'instrumentation du système d'exploitation pour retrouver la fenêtre de saisie recherchée du logiciel de gestion,
      ii. Appels des services d'instrumentation du système d'exploitation de la machine pour simulation d'actions sur un dispositif d'entrée de type souris,
      iii. Appels des services d'instrumentation du système d'exploitation pour simulation de l'enfoncement de touches du clavier de la machine correspondant aux données alphanumériques à transcrire,
   b. sur ce même écran de saisie préexistant et ainsi pré-rempli en certains de ses champs, l'utilisateur peut décider de compléter la saisie avant validation définitive, et ce à l'aide des programmes appartenant au logiciel de gestion ; lors de ces compléments de saisie, le procédé selon l'invention prévoit avantageusement que le module de pré-saisie (cf. point 4) ci-dessus) soit également alimenté par ces compléments, détectés par exemple par les actions clavier/souris correspondantes), ceci pour la mise en oeuvre de l'étape 6) ci-dessous.
6) Le module de pré-saisie effectue alors les opérations suivantes :
   a. enrichissement de la deuxième base de règles précitée pour ensuite pouvoir formuler à l'utilisateur des propositions de pré-saisie plus riches lorsqu'un jeu de données similaire se présentera. Par exemple, à partir du retour de ces compléments de saisie, le module de pré-saisie pourra ultérieurement déduire un code d'affectation comptable à suggérer lors de la prochaine saisie en l'associant automatiquement au fournisseur.
   b. enrichissement de la première base de règles précitée par exemple en retenant la position des champs dans la facture.

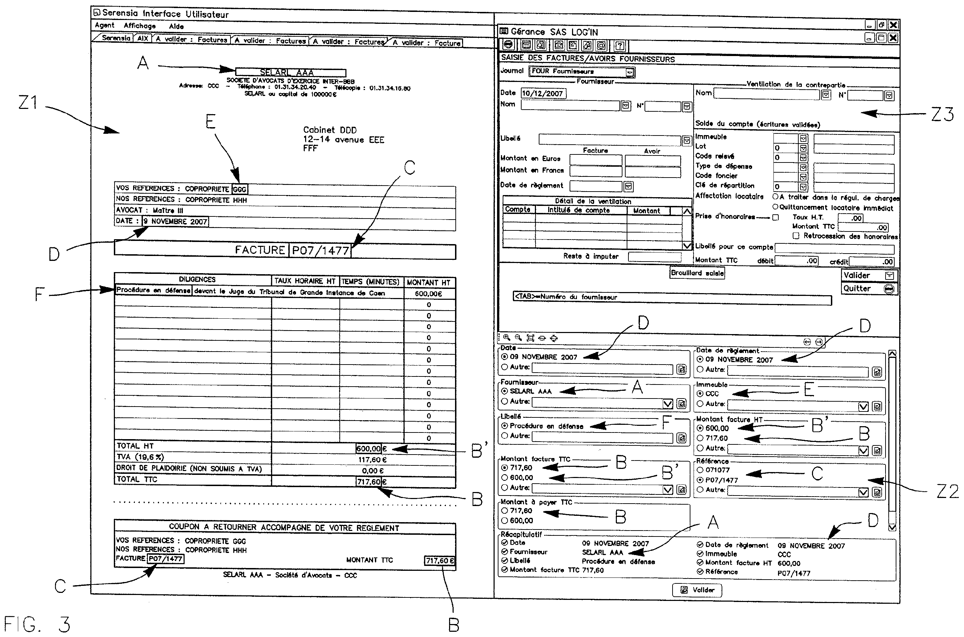

Les figures 3-4 et 5-6 illustrent deux exemples d'affichages engendrés par le procédé et le système de l'invention.

Comme on le voit sur ces figures, il est avantageux selon un aspect de l'invention de prévoir dans une fenêtre d'affichage commune :
- une première zone Z1 contenant la représentation graphique du document de départ, avec des éléments alphanumériques encadrés A, B, C, D, etc. représentatifs de l'existence de valeurs récupérées au niveau de l'étape d'extraction ;
- une deuxième zone Z2 de pré-saisie, où les informations extraites peuvent être vérifiées et validées ; et
- une troisième zone Z3 qui n'est autre que l'écran de saisie préexistant du logiciel de gestion.

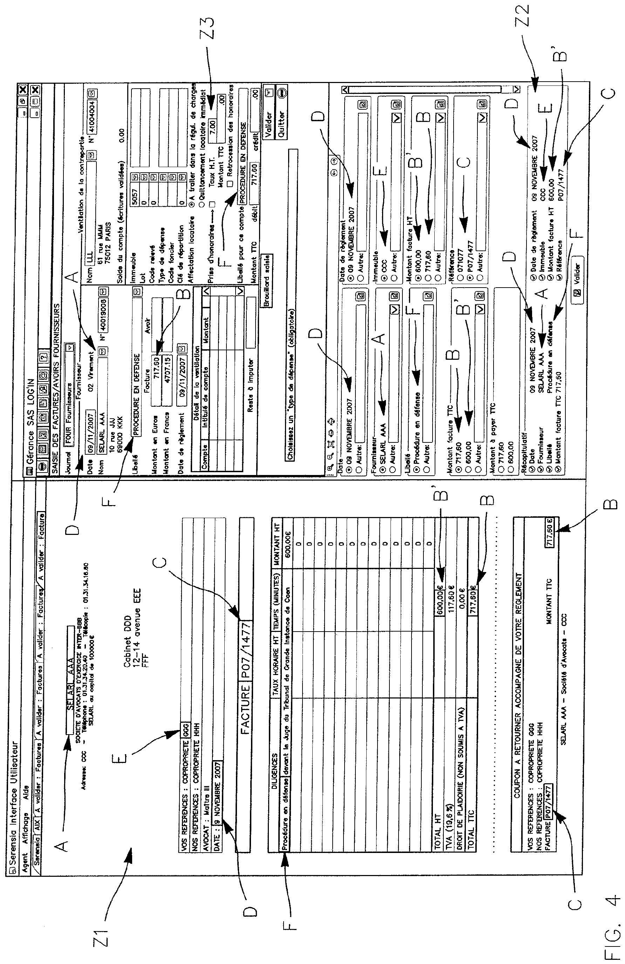

La figure 3 illustre cet affichage avant transcription des données récupérées dans l'écran de la zone Z3, cette transcription étant illustrée sur la figure 4, où les éléments alphanumériques transcrits sont désignés par les mêmes signes de référence A, B, C, etc. que dans la zone Z1.

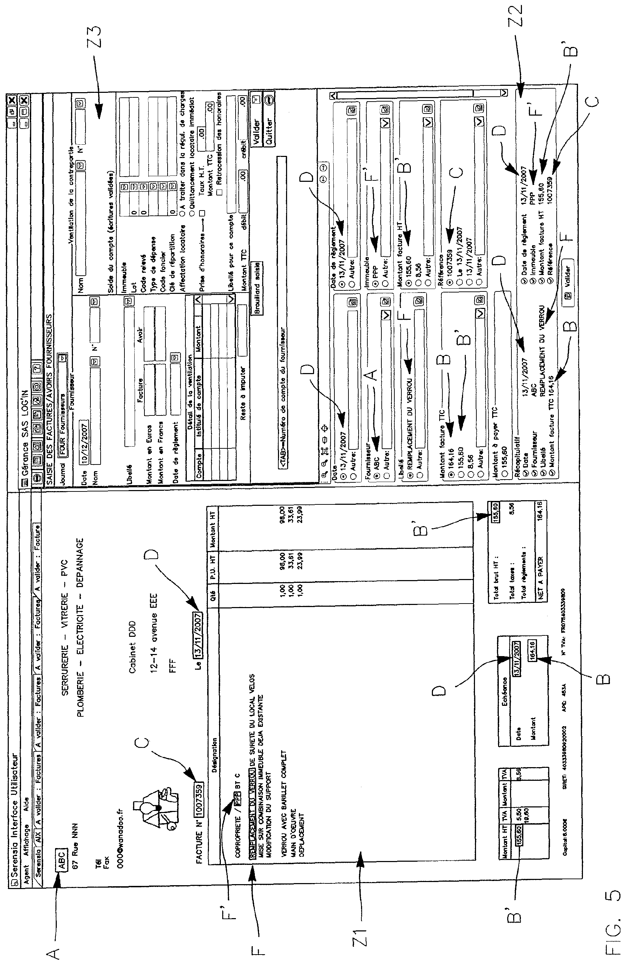

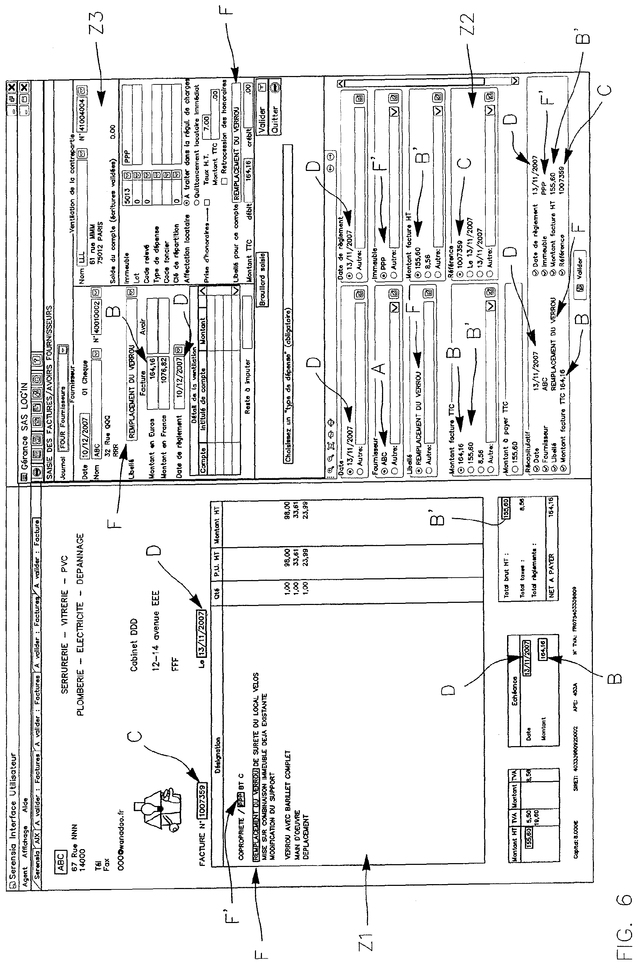

Les figures 5 et 6 illustrent un autre exemple selon le même principe.

Bien entendu, l'homme du métier peut apporter à l'invention de nombreuses variantes et modifications.

Par exemple, il est possible de recourir à des mécanismes de représentation en semi-transparence sur les zones de pré-saisie et de saisie Z2 et Z3 pour faciliter la visualisation et l'intelligibilité de ces zones. Ainsi, la zone Z2 de pré-saisie disparaît pour venir en masque transparent sur la zone Z3 afin d'obtenir un enrichissement fonctionnel de l'écran de saisie.

Une partie des fonctionnalités de la zone 2 peuvent être également répartis sur la zone 1 permettant à partir d'une zone reconnue des données brutes de suggérer des champs de l'écran de saisie du progiciel comme champs de destination (par exemple sous forme d'un menu contextuel).

Il est également possible, dans la zone de visualisation Z1, d'associer une zone de texte (telle qu'un libellé) à une zone définie de l'écran de saisie par un mécanisme tel que le suivant :
- sélection de la zone d'intérêt avec la souris par encadrement ou simple clic ;
- en réponse à cette sélection, affichage d'un menu contextuel qui contient la liste des champs possibles de l'écran de pré-saisie,
- à l'aide de la souris, choix du champ auquel on souhaite faire correspondre cette zone de texte.

## Revendications

1. Procédé de saisie assistée notamment pour un outil de gestion informatique, l'outil de gestion étant exécuté dans un système informatique possédant un système d'exploitation doté de services d'instrumentation permettant de découvrir le modèle et le contenu d'un écran de saisie préexistant et de simuler des actions de l'utilisateur, qui comprend les étapes suivantes :
(a) intégration de données brutes à partir d'une source extérieure,
(b) extraction de données pertinentes à partir desdites données brutes,
(c) transcription desdites données extraites vers des champs correspondants d'une interface de saisie préexistante appartenant à l'outil de gestion, en vue de permettre des compléments de saisie et une validation d'ensemble, **caractérisé en ce que** l'étape de transcription est réalisée par appel aux services d'instrumentation du système d'exploitation pour simuler une saisie dans les champs du module de saisie de l'outil de gestion.

2. Procédé selon la revendication 1, comprenant avant l'étape de transcription, une étape d'affichage, organisé en champs de pré-saisie, des données pertinentes extraites en vue de leur pré-validation

3. Procédé selon l'une des revendications 1 et 2, dans lequel l'étape d'extraction comprend une numérisation d'une image papier en image numérique, ou une étape de lecture d'un fichier structuré ou décrit selon un langage de description prédéfini.

4. Procédé selon l'une des revendications 1 à 3, dans lequel l'étape d'extraction comprend une reconnaissance optique de caractères ou une conversion de document en liste d'éléments alphanumériques et de coordonnées associées, ou une analyse lexicale et syntaxique.

5. Procédé selon l'une des revendications 1 à 4, lequel comprend en outre, après l'étape (b), une étape intermédiaire de qualification des données extraites à l'aide d'une base de règles d'extraction.

6. Procédé selon l'une des revendications 1 à 5 en combinaison avec la revendication 3, dans lequel l'étape d'affichage comprend une attribution, à l'aide d'une base de règles de pré-saisie, de valeurs possibles pour les différents champs de pré-saisie.

7. Procédé selon l'une des revendications 1 à 6, comprenant en outre une étape de saisie manuelle de données complémentaires dans le module de saisie préexistant de l'outil de gestion, et une étape d'enrichissement de la base de règles de pré-saisie et/ou de la base de règles d'extraction en fonction des données complémentaires.

8. Procédé selon l'une des revendications 1 à 7, comprend une étape d'affichage simultané d'une représentation des données brutes dans une première zone d'affichage, de champs de pré-saisie dans une deuxième zone d'affichage, et d'un écran de saisie du module de saisie préexistant dans une troisième zone d'affichage.

9. Système informatique, comprenant une unité centrale, des mémoires de programme et de travail, des dispositifs d'entrée et un dispositif d'affichage, **caractérisé en ce qu'**il contient des programmes aptes à mettre en oeuvre le procédé selon l'une des revendications 1 à 8.

## Patentansprüche

1. Verfahren zur unterstützten Eingabe insbesondere für ein rechnerbasiertes Managementwerkzeug, wobei das Managementwerkzeug in einem Informatiksystem mit einem Betriebssystem ausgeführt ist, das mit Instrumentierungsdiensten ausgestattet ist, mit denen das Modell und der Inhalt eines bereits vorhandenen Eingabebildschirms erkannt und Benutzeraktionen simuliert werden können, das die folgenden Schritte umfasst:
a) Rohdatenintegration aus einer externen Quelle,
b) Abruf relevanter Daten aus den Rohdaten,
c) Übertragung der abgerufenen Daten in entsprechende Felder einer bereits vorhandenen Eingabeschnittstelle, die zum Managementwerkzeug gehört, um Eingabezusätze und eine Gesamtbestätigung zu ermöglichen, **dadurch gekennzeichnet, dass** der Übertragungsschritt durch Aufruf der Instrumentierungsdienste des Betriebssystems durchgeführt wird, um eine Eingabe in die Felder des Managementwerkzeugs zu simulieren.

2. Verfahren nach Anspruch 1, umfassend vor dem Übertragungsschritt einen Schritt mit Anzeige, die in Voreingabefelder von relevanten Daten organisiert ist, die zur Vorbestätigung abgerufen werden.

3. Verfahren nach einem beliebigen der vorstehenden Ansprüche 1 und 2, wobei der Abrufschritt die Digitalisierung eines Papierbildes in ein digitales Bild umfasst oder einen Schritt des Lesens einer nach einer vordefinierten Beschreibungssprache strukturierten oder beschriebenen Datei.

4. Verfahren nach einem beliebigen der vorstehenden Ansprüche 1 bis 3, wobei der Abrufschritt eine optische Zeichenerkennung oder eine Dokumentenumsetzung in eine Liste von alphanumerischen Elementen und zugehörigen Koordinaten oder eine lexikalische und syntaktische Analyse umfasst.

5. Verfahren nach einem beliebigen der vorstehenden Ansprüche 1 bis 4, das ferner nach dem Schritt (b) einen Zwischenschritt der Qualifizierung der abgerufenen Daten unter Verwendung einer Abrufregelbasis umfasst.

6. Verfahren nach einem beliebigen der vorstehenden Ansprüche 1 bis 5 in Kombination mit Anspruch 3, wobei der Anzeigeschritt eine Zuweisung möglicher Werte für die verschiedenen Vorerfassungsfelder mit Hilfe einer Voreingabe-Regelbasis umfasst.

7. Verfahren nach einem beliebigen der vorstehenden Ansprüche 1 bis 6, ferner umfassend einen Schritt mit manueller Eingabe zusätzlicher Daten in das bereits vorhandene Eingabemodul des Managementwerkzeugs und einen Schritt mit Anreicherung der Voreingabe-Regelbasis und/oder der AbrufRegelbasis je nach den zusätzlichen Daten.

8. Verfahren nach einem beliebigen der vorstehenden Ansprüche 1 bis 7, umfassend einen Schritt der gleichzeitigen Anzeige einer Darstellung der Rohdaten in einem ersten Anzeigebereich, von Voreingabefeldern in einem zweiten Anzeigebereich und eines Eingabebildschirms des bereits vorhandenen Eingabemoduls in einem dritten Anzeigebereich.

9. Informatiksystem umfassend eine Zentraleinheit, Programm- und Arbeitsspeicher, Eingabevorrichtungen und eine Anzeigevorrichtung, **dadurch gekennzeichnet, dass** es Programme enthält, die das Verfahren nach einem beliebigen der vorstehenden Ansprüche 1 bis 8 ausführen können.

## Claims

1. A method of aided input especially for a computer management tool, the management tool being executed in a computer system possessing an operating system furnished with instrumentation services allowing to discover the model and content of a pre-existing input screen and to simulate user actions, which comprises the following steps:
(a) integration of raw data from an exterior source,
(b) extraction of related data from said raw data,
(c) transcription of the said extracted data towards corresponding fields of a pre-existing input interface belonging to the management tool, in view to allow additional inputs and an overall validation, **characterized in that** the transcription step is performed by call of the instrumentation services of the operating system to simulate an input in the input module fields of the management tool.

2. Method according to claim 1, comprising before the transcription step, a display step, organized in pre-input fields, of the related data extracted in view of their pre-validation.

3. Method according to claim 1 or 2, wherein the extraction step comprises a paper image scan in digital image, or a reading step of a structured file or described according to a predetermined description language.

4. Method according to one of the claims 1 to 3, wherein the extraction step comprises character or document conversion optical recognition in list of alphanumerical elements and associated coordinates, or a lexical and syntactic analysis.

5. Method according to one of the claims 1 to 4, which further comprises, after step (b), an intermediate qualification step of the data, extracted with the aid of a rules-based extraction.

6. Method according to one of the claims 1 to 5 in combination with claim 3, wherein the display step comprises an allocation, with the aid of a pre-input rules-base, of likely values for the various pre-input fields.

7. Method according to one of the claims 1 to 6, further comprising a manual input step of additional data in the pre-existing input module of the management tool, and an enrichment step of the pre-input rules-base and/or of the extraction rules-base depending on the additional data.

8. Method according to one of the claims 1 to 7, comprising a simultaneous display step of a raw data representation in a first display zone, of pre-input fields in a second display zone, and an input screen of a pre-existing input module in a third display zone.

9. Computer system, comprising a CPU, programme and working memories, input devices and a display device **characterized in that** it contains programmes able to implement the method according to one of the claims 1 to 8.
